# EUROPEAN PATENT SPECIFICATION

(11) **EP 0 469 037 B1**
(45) Date of publication and mention of the grant of the patent: **30.01.2002**
(21) Application number: 90906604.5
(22) Date of filing: 18.04.1990
(51) Int. Cl.: C09D 123/28, C09D 163/00, C09D 171/03, C09D 5/02, C08J 3/05, C08J 3/07, C08K 5/053, C08K 5/06, C08K 5/17, B05D 1/04, B05D 1/06, B05D 1/18, B05D 1/28

(54) **AQUEOUS COATING COMPOSITION**
WÄSSRIGES ÜBERZUGSMITTEL
COMPOSITION AQUEUSE DE REVETEMENT

(30) Priority: 20.04.1989 US 340845
(43) Date of publication of application: 05.02.1992
(60) Divisional application: 01115440.8
(73) Proprietor: A-LINE PRODUCTS CORPORATION, Detroit, MI 48207 (US)
(72) Inventor: LAURA, Alger, E., Riverview, MI 48192 (US); EASTON, Ronald, J., Clio, MI 48420 (US)
(74) Representative: Woods, Geoffrey Corlett
(86) International application number: US9002005
(87) International publication number: WO9012656

(56) References cited:
- WO-A-89/11494
- WO-A-90/12056
- BE-A- 668 814
- DE-A- 3 338 582
- US-A- 4 144 363
- US-A- 4 246 319
- US-A- 4 567 106
- US-A- 4 710 408
- US-A- 5 198 485

## Description

This invention relates to coating compositions, and more particularly to aqueous or water-based coating compositions.

Coating untreated polyolefin-containing substrates, such as polypropylene substrates, is generally difficult because of poor adhesion of coatings to this type of substrate.

In an effort to solve this problem, polyolefinic and other similar plastic or synthetic substrates have been typically coated with coating systems employing an organic solvent base. While the use of organic solvents appears to assist, to some degree, the organic contents of the coatings often render the coating composition or system undesirable from a number of aspects. For example, most organic solvents are derived from petroleum products, and thus are generally expensive and in short supply. Further, unless suitable costly recovery or disposal procedures are used, organic solvents, such as the commonly used aromatic organic solvents, may create a potential pollution problem.

Other popularly employed coatings include chromium-containing coatings. And like petroleum-based systems, unless properly controlled costly recovery or treatment methods are also employed, chromium-containing coatings are also potentially undesirable from an environmental standpoint.

Aqueous-based primer coatings, additionally employing substantial levels of aromatic organic solvents, have been suggested in the prior art. For example, such compositions have been disclosed by manufacturers or distributors such as Eastman Chemical Products. Likewise Emco Chemical Corporation has disclosed a primer for polypropylene that includes, as initial ingredients 25% by weight of a chlorinated polyolefin having a chlorine content of 30% (25% in xylene), 24.925% toluene, 0.025% sulfonated castor oil, 0.050% sodium lauryl sulfate, and 50.000% deionized water (as a final ingredient).

The use of chlorinated polyolefin materials as a primer for polyolefin substrates has also been proposed. For instance, U. S. Patent No. 4,303,697 discloses priming a polyolefinic substrate with a chlorinated polymeric material, such as chlorinated polypropylene, containing carboxylic acid anhydride groups, and exposing the primed substrate to ultraviolet radiation.

U. S. Patent No. 4,070,421 discloses chlorinated polyolefinic compositions useful as primers for adhesion improvement of decorative or protective coatings to polyolefins.

U. S. Patent No. 3,579,485 discloses chlorinated carboxyl group-containing poly-α-olefins, which form primer coatings for use on untreated poly-α-olefin substrates, and have aromatic solvents as a preferred solvent.

The following United States patents relate more generally to coating compositions for substrates, including coating compositions for polyolefin substrates: 4,710,408; 4,567,106; 4,417,022; 4,343,925; 4,317,894; 4,314,918; 4,263,411; 4,246,319; 4,214,039; 4,144,363; 4,046,587; 4,028,329; 3,849,148; 3,317,330; 3,218,189; and 2,998,324.

WO 90/12056, which forms part of the state of the art by virtue of Article 54(3) and (4) EPC, discloses an aqueous coating composition for plastic moldings, which composition may contain 2 to 15 parts by weight of low glycols such as butyl glycol or ester alcohols such as 2,2,4-trimethyl-1,3-pentandiol-monoisobutyrate or 1-methyl-2-pyrolidinone or mixtures thereof, 34 to 62 parts by weight of water, 12.5 to 25 parts by weight of binder mixture, 15.5 to 37.5 parts by weight of pigment mixture, 0.2 to 1 part by weight of customary auxiliaries (wetting agents and antifoaming agents) and 8 to 16 parts by weight of chlorinated polyolefins(s).

It is therefore an object of the present invention to provide an aqueous-based coating composition, with a reduced level of, or substantially free of, volatile organic components or solvents (such as aromatic organic solvents) for coating substrates such as polyolefin-containing substrates.

### Detailed Description of the Invention

The present invention comprises aqueous or water-based coating compositions useful in coating polyolefinic-containing substrates. The compositions are also useful in coating other troublesome metallic and synthetic substrates, i.e., substrates that are difficult to coat with good adhesion. The compositions comprise:
(a) a polyol having a molecular weight of at least 62 to 500 in an amount sufficient to coalesce the coating composition;
(b) 0.5 percent to 40 percent by weight of a resin selected from halogenated polyolefinic resin materials, halogenated polyvinyl resins, epihydrin resins, halogenated epoxy resins, and mixtures thereof, said resin having a molecular weight of 10,000 to 30,000, or a softening point of 66 to 177°C (150 to 350°F) ;
(c) 0.05 to 15 percent by weight of a surfactant;
(d) 0.01 to 10% by weight of an amine selected from primary, secondary and tertiary aliphatic amines having an amine functionality of 1 to 3, and mixtures thereof; and
(e) 30 to 95% by weight water, wherein said composition contains less than 5% by weight of aromatic organic solvents.

The compositions can be used to efficaciously coat polyolefinic-like substrates while employing substantially reduced levels of volatile organic solvents or volatile organic components (VOC's). In a preferred embodiment, the compositions of the present invention contain very low levels of volatile organic solvents, especially aromatic solvents, such as benzene, xylene, toluene, or similar materials or components. In a highly preferred embodiment, the compositions of the present invention are substantially-free of volatile organic components or materials, especially aromatic organic solvents such as e.g., benzene, toluene, and xylene.

The coatings provided by the compositions and methods of the present invention may be decorative, protective, or act as a base or pre-treatment for another coating or treatment step to come; they may also be employed to perform two or more of these functions.

They may be applied or deposited by any convenient method, such as e.g., spraying, dipping, roller-coating or electrostatic deposition.

While it may have other functions as well, (and without intending to be bound by theory) the polyols employed in the compositions and methods of the present invention are used primarily, without limitation, as coalescing agents. The polyols employed in the methods and compositions of the present invention are preferably distillable polyols. Thus, several different classes of polyols are suitable for use in the compositions and methods of the present invention.

The preferred polyols for use in the present invention are glycol-type polyols, and still more preferably ethylene glycol-type polyols. In particular, preferred glycol-type polyols include alkylene glycols, such as ethylene glycol, diethylene glycol, triethylene glycol, tetraethylene glycol, propylene glycol, dipropylene glycol, tripropylene glycol, and hexylene glycol as well as other glycols such as 1,3-butylene glycol, and ethoxytriglycol. Mixtures of two or more of these materials may also be employed. The most preferred glycols are alkylene glycols. Ethylene glycol is one of the most preferred.

Preferably the polyol is generally volatile and has a hydroxyl functionality of at least 2, and preferably 2 - 6 hydroxy groups, per mole of polyol. Further, the polyol preferably has an average molecular weight of 62 to 500, even more preferably 62 to 425, and still more preferably 62 to 250.

The final coating compositions and methods of the present invention preferably employ the selected polyol at a level of between 3% to 40%, by weight of the final composition. In a more preferred embodiment, the polyol constitutes 3% to 20%, and still more preferably 3% to 10%. In one highly preferred embodiment the polyol comprises about 4.9% of the total weight of the final coating composition.

The selection of the resin for use in the compositions and methods of the present invention is extremely important. While the skilled artisan will appreciate that its selection will depend upon many factors, such as the nature of the ultimate surface to be coated (or related utility), processing conditions, the other components selected (i.e., the glycol, amine, surfactant, etc.), environmental concerns and costs, the following discussion relates to presently preferred materials.

The resins preferred for use in the composition and methods of the present invention include halogenated polyolefinic resin materials, as well as other art-disclosed halogenated materials and resins, such as PVC and related materials, and homo-, co- or terpolymers of such materials. It should be noted, however, that under certain conditions, non-halogen-containing resins may be employed, alone (as homopolymers) or as co- or terpolymers, along with halogenated materials. Rubbers may also be employed.

As noted, one class of preferred resins is halogenated polyolefinic materials. The halogenated polyolefinic materials preferred for use in the compositions and methods of the present invention are chlorinated polyolefinic materials. The chlorinated polyolefinic resin materials selected for use in the present coating compositions and methods should preferably have a chlorine content of from 10 to 40 weight percent, more preferably 10 to 30 weight percent, even more preferably 18 to 22 weight percent, and still more preferably 19 to 21 weight precent. In a presently highly preferred embodiment, the chlorine content of a resin should comprise about 19.9 weight percent of the material.

The chlorinated resin, e.g., chlorinated polyolefin, may be supplied for use in the compositions or systems in any suitable form, with powder or pelletized forms being the preferred forms.

The chlorinated polyolefin may be prepared according to known methods, such as those described in U.S. Patent No. 4,070,421. For use in the present compositions and methods, the chlorinated polyolefin materials can be selected from commercially available materials such as those supplied by Eastman Chemical Products, Rochester, N.Y. under the trade name CPO-343-1 (100%). Other commercially available materials that may be employed under certain conditions include PM 12075-00, and 12075-OF, also supplied by Eastman Chemical Products, Rochester, N.Y., and CP-26P, CP-30P and CP-32P, products of Toyo Kasei Kogyo Co. Ltd., Osaka, Japan.

As noted in U.S. Patent No. 4,070,421, the resins of the present invention can be admixed with other hydrocarbon-type resins; see Col. 2, 1. 15-38 of said '421 patent.

Preferably, the chlorinated polyolefins and other preferred chlorinated resins of the present compositions and methods have a softening point in the range of 66° to 177°C (150°F to 350°F), more preferably 66° to 121°C (150°F to 250°F), and still more preferably in the range of 82° to 99°C (180°F to 210°F). Moreover, the preferred chlorinated polyolefins or other preferred chlorinated resins for use in the compositions and methods of the present invention have average molecular weights in the range of 10,000 to 30,000, even more preferably 15,000 to 30,000, and still more preferably 22,000 to 29,000. The chlorinated polyolefins and other preferred chlorinated resins employed in the coating compositions and methods of the present invention preferably constitute 0.5% to 30% (and perhaps as high as 40%), more preferably 2% to 10%, still more preferably 2% to 5% by weight of the total composition. In one highly preferred embodiment, it is employed at a level of about 4.3%; in yet another it is about 10%.

Another group of useful resins, as noted above, include various halogenated polyvinyl resins, preferably chlorinated polyvinyl resins or PVC's; such materials also include PVC-like materials. Exemplary materials include polyvinyl chloride, polyvinylidene chloride, and polyvinyl chloride-vinyl acetate or -maleic anhydride resins. Homo-, co- and terpolymeric materials made from such materials may be employed; mixtures of such materials may also be used.

Other similar useful materials include resins prepared from epihydrin resins such as polyepichlorohydrins or brominated epoxides. These materials may be employed as homopolymers, copolymers and terpolymers; again, mixtures of such materials may also be employed.

As with the polyolefin materials described above, it is preferred that the final resin material employed in the compositions and methods of the present invention be chlorinated and have general physical properties similar to the olefinic materials. For example, an average molecular weight in the range of 10,000 to 30,000 is preferred. Likewise, it is highly preferred that at least a part of the final resin material be chlorinated and have a chlorine content of 10 to 30 percent. They are employed in the methods in similar fashions and in the compositions at similar levels.

The preferred compositions and methods of the present: invention further include surface active agents, such as surfactants. Without intending to be bound by theory, the surface active agent serves primarily as an emulsifying agent in the present compositions. However, the surface active agent may also serve, without limitation, as an agent for wetting the surface of a material coated with the present coating compositions.

The surfactants preferred for use in the compositions and methods of the present invention include both high molecular weight (average molecular weight of 500 or more) and low molecular weight (average molecular weight of less than 500) nonionic, amphoteric, cationic and anionic materials. Polymeric surfactants may also be employed.

Exemplary nonionic materials include, for example, organic materials which contain groups of varying polarity whereby one part of the molecule is hydrophilic and the other is hydrophobic. Examples of such materials include polyethylene polyols, polyvinyl alcohol, polyethers, polyesters and polyhalides. The non-ionic surface active agent or other surface active agent selected is a surfactant and is present in an amount of 0.05% to 15%, more preferably 0.05% to 10%, still more preferably 0.1% to 10%, and still more preferably at a level of 0.5% to 7.0%, by weight of the total weight of the composition.

A highly preferred class of nonionic surface active agents or surfactants includes those that belong to the series of nonylphenoxy polyethoxy ethanol surfactants. In particular, these highly preferred surfactants preferably contain 5 to 25, and more preferably 7 to 15, and still more preferably 7 to 10 ethylene oxide groups per mole of surfactant. Thus, commercial surfactants suitable for the present invention include, without limitation, Triton N-101™ manufactured by Rohm and Haas; as well as other commercially available materials such as Triton X-100, GAF CO-630 and Makon 10 manufactured by Stepan Chemical, Voeppe, France.

Alternative preferred surfactants include fluorosurfactant materials such as FC- 129, 430 manufactured by Minnesota Mining and Manufacturing.

Exemplary anionic surface - active agents include materials such as those containing a carboxylate group attached directly to a hydrophobic group, or, in the alternative, where there is an intermediate functionality such as an ester, amide or sulfonamide. Other useful materials include anionic agents derived from sulfuric or sulfonic acids in which the hydrophobic groups are selected from aliphatic or aromatic groups of varying polarity, such as halides, hydroxyls, ether and/or ester groups. A preferred anionic material is a material such as sodium lauryl sulfate.

Exemplary cationic surface - active agents are those derived from amino groups (including primary; secondary; and/or tertiary amine salts) wherein the hydrophilic character is obtained by groups of varying polarity. Also exemplary are materials such as quaternary ammonium compounds, guanidine, and thiuronium salts.

Exemplary polymeric surfactants would include those manufactured by ICI Americas under the Tradename designations of Hypermer P52 and Hypermer P53.

As will be appreciated by the skilled artisan, there are a wide variety of such surface-active agents available. They are conveniently listed, by class, in "McCutcheon's Emulsifier's & Detergents," North American Edition, 1982, pp. 322-327. They are employed in a similar fashion and at similar levels to the preferred non-ionic materials discussed above.

The amines for use in the compositions and methods of the present invention include primary, secondary and tertiary aliphatic amines.

The aliphatic amine has an amine functionality of between 1 and 3, and optionally contain other oxygen-containing functional groups as well. Preferred amines include primary, secondary and tertiary alkylamines, alkyldiamines, alkanolamine, dialkanolamine, and poly(oxyalkylene)diamines. A highly preferred group of amines further contains amines having one or more hydroxy or alkoxy (ether) groups and an average molecular weight in the range of 50 to 7,000.

A highly preferred group of amines are primary, secondary and tertiary aliphatic amines having a functionality of 1 to 3 and can be generally represented by the general formulae: 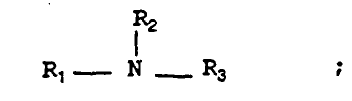 or 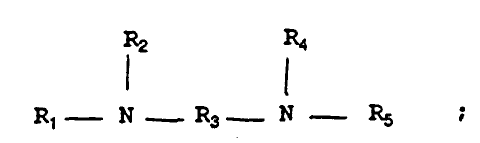 or 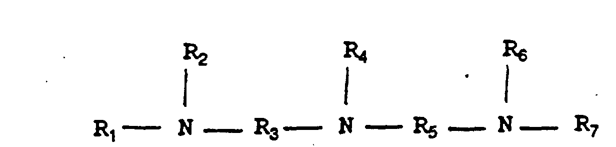 wherein R₁ - R₇ are independently selected from H or straight or branched chain alkyl, hydroxyalkyl, or alkoxylalkyl groups of 1 to 20 carbon atoms; R₁ - R₇ can additionally include a substituted alkyl group, i.e., where one or more of the carbons in the radical is replaced with or has substituted thereon another functionality, e.g. an amine, ether, hydroxy or -mercapto moiety, e.g. tris-(3-aminopropyl) amine.

Another group of highly preferred amines within the above classes are those primary, secondary or tertiary aliphatic amines of the above Formulae in which R₁-R₇ is specifically substituted with or contains one or more hydroxyl (-OH) functionalities.

Another group of preferred amines can be represented by the formulae: 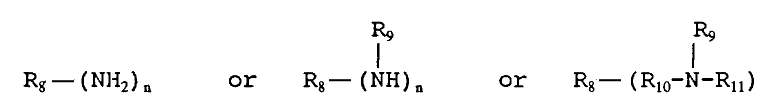 wherein n is 1 or 2 and R₈, R₉ and R₁₁ are independently selected from straight or branched chain alkyl, hydroxyalkyl or alkoxyalkyl groups of 1 to 20 carbon atoms and R₁₀ is a straight or branched chain alkylene, hydroxyalkylene or alkoxyalkylene group of 1 to 20 carbon atoms. These chains may also be substituted with another functionality as described above.

Yet another group (or subgroup of the above) which comprise amines preferred in the practice of the present invention are primary, secondary and tertiary aliphatic amines with an amine functionality of 1-3 which also contain one or more ether or alkoxy linkages. Such materials are sometimes referred to as poly(oxyalkylene)diamines. Ethoxylated or propoxylated materials are particularly preferred. For example, a useful variety of such materials are those manufactured by Texaco Co. and marketed under the Trade Name or designation of "Jeffamines". Such useful materials are typically poly(oxyethylene) or poly(oxypropylene) amine or diamine materials having molecular weights of 400 to 2000. These materials typically carry the Jeffamine mark or designation and include a "series" designation of "A"; "M"; "D"; "ED"; and "DU". Many such materials have been found to be useful.

Examplary amines preferred for use in the present invention include:
2-amino-1-butanol;
4-amino-1-butanol;
2-aminoethanethiol;
2 -aminoheptane;
2-amino-1-hexanol;
6-amino-1-hexanol;
allylamine;
2-amino-3-methyl-1-butanol;
2-amino-2-methyl-1,3-propanediol;
2-amino-2-methyl-1-propanol;
2-amino-1-pentanol;
5-amino-1-pentanol;
3-amino-1-propanol;
amylamine;
butylamine;
*N,N'*-bis(2-aminoethyl)-1,3-propanediamine;
*N*,*N*'-bis(3-aminopropyl) -1,3-propanediamine;
1,3-bis(dimethylamino)-2-propanol;
1-[*N,N*-bis(2-hydroxyethyl)amino]-2-propanol;
*N,N'*-bis(2-hydroxyethyl)ethylenediamine;
decylamine;
1,4-diaminobutane;
1,10-diaminodecane;
1,12-diaminododecane;
1, 7-diaminoheptane;
1,3-diamino-2-hydroxypropane;
3,3'-diamino-*N*-methyldipropylamine;
1,2-diamino-2-methylpropane;
1,9-diaminononane;
1,8-diaminooctane;
1,5-diaminopentane;
1,2-diaminopropane;
1,3-diaminopropane;
dibutylamine;
3-(dibutylamino)propylamine;
diethanolamine;
diethylamine;
5-diethylamino-2-pentanol;
3-(diethylamino)-1,2-propanediol;
1-diethylamino-2-propanol;
3-diethylamino-1-propanol;
3-diethylaminopropylamine;
diethylenetriamine;
*N,N*-diethylethanolamine;
*N,N*-diethylethylenediamine;
*N,N*-diethylmethylamine;
*N,N'*-diethyl-1,3-propanediamine;
diisobutylamine;
diisopropanolamine;
diisopropylamine;
2-(diisopropylamino)ethanol;
3-diisopropylamino-1,2-propanediol;
*N,N*-diisopropylethylamine;
1-dimethylamino-2-propanol;
3-dimethylamino-1-propanol;
3-dimethylaminopropylamine;
1,3-dimethylbutylamine;
3,3-dimethylbutylamine;
*N*,*N*-dimethylethanolamine;
*N,N*-dimethylethylamine;
*N,N*-dimethylethylenediamine;
*N,N*-dimethyl-*N*'-ethylethylenediamine;
*N,N'*-dimethyl-1,6-hexanediamine;
2,5-dimethyl-2,5-hexanediamine;
1,5-dimethylhexylamine;
2,2-dimethyl-1,3-propanediamine;
(±)-1,2-dimethylpropylamine;
dipropylamine;
dodecylamine;
ethanolamine;
3-ethoxypropylamine;
ethylamine;
2-(ethylamino)ethanol;
*N*-ethylbutylamine;
2-ethylbutylamine;
*N*-ethyldiethanolamine;
ethylenediamine;
hexamethylenediamine;
1,6-hexanediamine;
hexylamine;
isoamylamine;
isopropylamine;
*N*-isopropylethylenediamine;
*N*'-isopropyl-2-methyl-1,2-propanediamine;
*N*,*N*,*N*',*N*'-tetramethyl-1,4-butanediamine;
*N*,*N*,*N*',*N*'-tetramethyldiaminomethane;
*N*,*N*,*N*',*N*'-tetramethylethylenediamine;
*N,N,N',N'*-tetramethyl-1, 6-hexanediamine;
*N*,*N*,*N*',*N*'-tetramethyl-1,3-propane-diamine;
*N,N,*2,2-tetramethyl-1,3-propanediamine;
tributylamine;
tridecylamine;
triethanolamine;
triethylamine;
triisooctylamine;
triisopropanolamine;
trimethylamine;
methylamine;
2-(methylamino)ethanol;
*N*-Methylbutylamine;
1-methylbutylamine;
2-methylbutylamine;
*N*-methyldiethanolamine;
*N*-methylethylenediamine;
*N*-methyl-1,3-propanediamine;
nonylamine;
octylamine;
*tert*-octylamine;
propylamine;
2-(propylamino)ethanol;
1-tetradecylamine; and
tris(3-aminopropyl)amine. Mixtures of such materials may also be employed.

Without intending to be bound by theory, the amine, (especially an amino substituted alkanol) is present to further facilitate emulsification of the coating composition.

In a highly preferred embodiment, the amino-substituted alkanol is 2-amino - 2-methyl - 1-propanol, e.g., AMP-95. Alternatively, the amino-substituted alkanol may be substituted with a constituent selected from the group consisting of triethylamine, triethanolamine, diethanolamine, dimethylethanolamine or a 2-dimethylamino-2-methyl-1-propanol, and mixtures thereof.

Commercial amino-substituted alkanols suitable for the present invention would include, without limitation AMP-95™, and DMAM P-80™, both manufactured by Angus Chemical.

Highly preferred materials include:
2-amino-2-methyl-1-propanol;
ethanolamine;
dibutylamine;
dimethylethanolamine;
N-ethyldiethanolamine; and
tris-(3-aminopropyl)amine.

Highly preferred poly(oxyalkylene)diamines include Jeffamine M600; D230; D400; D200; ED600; ED900; ED2001; ED4000; ED6000; DU700 and T3000.

The amine such as an amino-substituted alkanol, is present in an amount of 0.01% to 10% percent, more preferably 0.05% to 5%, and still more preferably 0.05% to 3% of the total weight of the final coating composition or system.

The coating compositions of the present invention further include water. Water is present in an amount equal to 30% to 95%, more preferably 50% to 95%, still more preferably 75% to 95% and still more preferably 90% to 95%, by weight of the total composition. However, it will be appreciated that the amount of water may be varied to meet the coating properties required for a particular application. For instance, where a more viscous coating is desired, the amount of water may be reduced. The level of water may also be dramatically reduced in order to prepare a concentrate where dilution is intended later.

Thus, the present invention provides a method of making an aqueous composition comprising the steps of (a) preparing the composition as a concentrate having a reduced level of water compared with the aqueous composition which is to be made, and (b) diluting the concentrate of step (a) with additional water to produce the composition of the invention.

Preferably, the pH of the final coating composition or system is in the range of 7-10.5, and is more preferably 7.5 to 9.0.

The compositions of the present invention are substantially free of aromatic organic solvents, e.g., benzene, or substituted benzene materials such as xylene and toluene. By "substantially free of aromatic organic solvents," as used herein, it is meant that the solvent is present at less than 5% by weight, more preferably less than 2.5%, and still more preferably less than 1%, by weight of the final coating composition. It will be appreciated that this term does not apply to the required components of the invention, such as the halogenated polyolefin, glycol, etc., disclosed herein.

The ultimate level of any component may vary according to many factors such as the type, purpose or function of the desired coating, the coating weight, the substrates to be coated, the shape of the article to be coated, the preparation of surface to be coated, and many other factors recognized and understood by the skilled artisan. For example, it may be desirable to prepare a concentrate that would be later diluted with water after shipment or just prior to use. Accordingly, it will be appreciated that the ranges given above will be for the final use composition and a concentrate would have correspondingly higher level of the basic components prior to dilution.

While it will again be appreciated that any suitable sequence of processing steps may be employed to prepare the compositions of the present invention, or a concentrate thereof, the following is a preferred method. However, the sequence of steps may be varied under some circumstances. As used herein, the phrase "starting material ratio" refers to the ratio of constituent amounts as measured before any admixing steps have occurred i.e. while all materials are still in an initial starting material state.

A presently preferred composition may be prepared by admixing, using conventional means, a predetermined amount of the glycol with a predetermined amount of the surfactant. Preferably the starting material ratio of glycol to surfactant is 4:1 to 8:1, and more preferably about 6:1, by weight. The glycol-surfactant admixture is then heated, while under agitation, to a first predetermined temperature, preferably in the range of 66° to 135°C (150°F to 275°F), and more preferably in the range of 99° to 121°C (210°F to 250°F). In a preferred embodiment, this temperature is slightly greater than the softening point of the chlorinated polyolefin employed in the coating composition.

When the glycol-surfactant admixture reaches the predetermined desired temperature, the temperature is then maintained relatively constant and the chlorinated polyolefin is added thereto, optionally under a nitrogen blanket. Preferably the starting materials ratio of chlorinated polyolefin to glycol, preferably an ethylene glycol is 11:1.5 to 1:3, and more preferably about 1:1.63.

To the resulting admixture, a predetermined amount of an amine, preferably an amino-substituted alkanol is added. Preferably the starting materials ratio of chlorinated polyolefin to amino-substituted alkanol is 25:1 to 40:1.

The components are admixed for 3 to 5 minutes in a sealed mixing tank, or alternatively in a reflux condenser.

The chlorinated polyolefin is next admixed with the glycol surfactant admixture for an amount of time sufficient to permit the chlorinated polyolefin to melt. The temperature of the admixture is then preferably maintained for at least 10 minutes at a temperature of about 19°C (35°F) above the softening point of the chlorinated polyolefin. Thus, the temperature should preferably be maintained at 96 to 121°C (205°F to 250°F), and more preferably at 99° to 116°C (210°F to 240°F), again, depending upon the softening point of the chlorinated polyolefin. The admixture then forms a molten mass. At this point, preheated water is added to form an emulsion.

Water is added to the composition in three separate steps. The first step preferably includes adding hot water i.e. water at a temperature of 52° to 71°C (125°F to 160°F), in a starting material ratio of chlorinated polyolefin to water of 2.5:1 to 4.5:1 and more preferably about 3.4:1. The composition is agitated. As the hot water becomes absorbed into the molten mass, an additional amount of hot water is then added under continued agitation. Preferably the second addition of hot water is added in a starting material ratio of chlorinated polyolefin to water of 2.5:1.0 to 4.5:1.0, and more preferably about 3.4:1. At this point an inversion preferably takes place.

Throughout the water additions, the temperature of the materials admixture is preferably maintained at a temperature of about 11°C (20°F) above the softening point of the chlorinated polyolefin. Thus, it is maintained at 74° to 99°C (165°F to 210°F), and more preferably in the range of 91 to 99°C (195°F to 210°F), depending upon the softening point of the chlorinated polyolefin. To the resulting admixture, and after the second amount of water has been absorbed by the molten mass, a third amount of water is added under increased agitation. Preferably the amount of the third addition of water is sufficient for the addition to have a chlorinated polyolefin to water starting material ratio of 1:33 to 1:40, and more preferably 1:30 to 1:35. The amount of water preferably yields a final viscosity at room temperature in the range of 25 to 50 mPa.s (25 to 50 CPS). Further, the resulting admixture preferably has a non-volatile organic content of less than 5%, and preferably about 3.5%. It is also preferably substantially free of volatile organic solvents or components. In a highly preferred embodiment, the organic volatile content is less than 0.5%.

The methods of the present invention may also comprise contacting an article, e.g. a prepared (e.g., cleaned and dried) olefinic-based surface, such as polypropylene, with a composition as described above.

The above-described compositions and methods are useful for producing a water-based coating composition suitable for coating a variety of substrates. Without limitation, the compositions are suitable for coating, e.g. plastics, wood, ceramic, metal and wallboard. Particularly useful applications include coating the present coating compositions onto a plastic substrate such as a polyolefinic substrate, including polypropylene substrates and thermoplastic olefin substrates. The present water-based compositions are especially useful as primer compositions because of their ability to adhere well to heretofore difficult substrates, such as polyolefinic substrates, including polypropylene.

After suitable preparation of a substrate surface, the compositions may be applied to a substrate surface in any suitable manner including, without limitation, spraying, dipping, brushing, rolling, and flow-coating methods.

Moreover, it is contemplated that one or more conventional additives may be included in the present compositions. For instance it is possible that pigment for coloration purposes may be added. Moreover, thickeners, such as a functional polyacrylate, available commercially as Alcoqum L-31™, manufactured by Alco Chemical, can be added to control viscosity and flow of the material.

Also, it is possible to add materials, such as carbon black, and conductive pigments, to render the resulting composition conductive for purposes of electrostatic coating application techniques. When an additive that includes carbon black is added to the above-described coating compositions or systems, it is preferred that an additive mixture of carbon black, glycol, surfactant and water is mixed at high speed, dispersed on an apparatus such as a sandmill, and then added to the above-described coating compositions.

More preferably the additive mixture includes 20% to 25% by weight carbon black, such as commercially available Cabot XC-72R™, 15% to 25% by weight ethylene glycol, 1% to 3% by weight of a nonylphenoxy polyethoxy ethanol surfactant, and 50% to 65% by weight water. After mixing and grinding, the additive is added to the coating composition in a ratio of preferably approximately 9.5 parts additive to 100 parts emulsion.

It should also be noted that the compositions of the present invention can be incorporated into coating formulations such as paints and inks to provide a material suitable for simultaneously priming and coating a substrate surface.

Prefered embodiments of the invention are set out in the claims 2 to 31.

The following example is illustrative of the described invention.

### Example

Ethylene glycol in the amount of 110 grams is admixed with 17 grams of surfactant, such as Triton N-101™. The admixture is heated to 99°C (210°F) under agitation. When the product reaches 99°C (210°F), 67.5 grams of a chlorinated polyolefinic resin, such as CPO-343-1 (100 percent), is mixed in until the chlorinated polyolefin disperses. The temperature is maintained at about 99°C (210°F) for about 10 minutes. At that time, 2.1 grams of an amine, such as a 2-amino-2-methyl-1-propanol (AMP 95™) is added. The mixture is mixed for three to five minutes with an increase in temperature to 116° to 121°C (240 - 250°F) so that the mixture will melt. A hot water supply is heated to about 60°C (140°F) and is maintained at about 60°C (140° F) throughout the several water additions. Twenty grams of the hot water is added to the admixture at a slow rate. As the hot water becomes absorbed into the molten mass, agitation is increased. Upon absorption of the hot water, 20 additional grams of the hot water from the hot water supply is slowly added to the molten mass. Temperature is maintained at about 93° to 99°C (200 - 210°F.) Agitation is increased, and 1970 grams of hot water, from the hot water supply, is added to the admixture.

The coatings are then tested for adhesion by spraying on a polypropylene panel with the above emulsion and drying the coating for a time of 15 minutes at a temperature of 79°C (175°F). The coated surface of the substrate can be topcoated with a suitable top coat and cured for about 15 minutes at 71°C (160°F) and cooled. The coated surface is then cross-hatched with a sharp blade and tested with pressure sensitive adhesive tape (3M 610 or equivalent) by firmly pressing the tape over the crosshatched region and then quickly removing the tape. Upon removal of the tape, adhesion to the substrate of about 95% to 100% of the coating is observed. Satisfactory test results are also demonstrated using alternative testing methods of the type including test method GM 9502P, described in a July, 1988 publication by General Motors entitled Engineering Materials and Processes, Procedures Manual; and test method ASTM D3359 B.

Substantially similar results may be obtained by variation of the above according to the teachings of the present disclosure. For example, the AMP 95 may be replaced, in whole or in part, with another form or brand of 2-amino-2-methyl-1-propanol; ethanolamine; dibutylamine; N-ethyldiethanol-amine; tris-(3-aminopropyl)amine; dimethylethanolamine triethylamine; diethanolamine; dimethylaminoethanol; 2-dimethylamino-2-methyl-1-propanol; DMAM P-80™; Jeffamine™ M600, D230, D400, D2000, ED600, ED900, ED2001, ED4000, ED6000, DV7000 or T3000; mixtures may also be employed.

Further, the levels of the various components may be varied. For example, the level of surfactant and/or glycol can be reduced by 50%.

## Claims (Claims for the following Contracting State(s): FR,DE,IT,SE,CH,GB)

1. An aqueous coating composition, comprising:
(a) a polyol having a molecular weight of at least 62 to 500 in an amount sufficient to coalesce the coating composition;
(b) 0.5% to 40% by weight of a resin selected from halogenated polyolefinic resin materials, halogenated polyvinyl resins, epihydrin resins, halogenated epoxy resins, and mixtures thereof, said resin having a molecular weight of 10,000 to 30,000;
(c) 0.05 to 15% by weight of a surfactant;
(d) 0.01% to 10% by weight of an amine selected from primary, secondary and tertiary aliphatic amines having an amine functionality of 1 to 3, and mixtures thereof, and
(e) 30 to 95% by weight water, wherein said composition contains less than 5% by weight of aromatic organic solvents.

2. An aqueous coating composition according to claim 1, wherein said resin is at least in part a halogenated polyolefinic resin material and said halogenated polyolefinic resin material is present in an amount of 2 to 10 weight percent.

3. An aqueous coating composition according to claim 2, wherein said halogenated polyolefinic resin material is present in an amount of 2 to 5 weight percent.

4. An aqueous coating composition according to claim 2, wherein said halogenated polyolefinic resin material has a molecular weight of 15,000 to 30,000.

5. An aqueous coating composition according to claim 4, wherein said halogenated polyolefinic resin material has a molecular weight of 22,000 to 29,000.

6. An aqueous coating composition according to claim 2, wherein said halogenated polyolefinic resin material is a chlorinated polyolefin with a chlorine content of 10 to 40% by weight.

7. An aqueous coating composition according to claim 1, wherein said polyol is a glycol.

8. An aqueous coating composition according to claim 1, wherein said polyol is an alkylene glycol.

9. An aqueous coating composition according to claim 1, wherein said polyol is present at a level of 3 to 10% by weight.

10. An aqueous coating composition according to claim 1, wherein said surfactant is an alkoxylated nonionic surfactant.

11. An aqueous coating composition according to claim 10, wherein said nonionic surfactant is present in an amount of 0.05% to 15% by weight.

12. An aqueous coating composition according to claim 10, wherein said nonionic surfactant has 7 to 10 ethylene oxide groups per mole of surfactant.

13. An aqueous coating composition according to claim 1, wherein said amine is selected from the group consisting of alkylamines, alkyldiamines, alkanolamines, dialkanolamines, tertiary amines, poly(oxyalkylene) diamines, and mixtures thereof.

14. An aqueous coating composition according to claim 1, wherein said amine further comprises at least one hydroxy, ethoxy, or propoxy group.

15. An aqueous coating composition according to claim 1, wherein said amine is selected from the group consisting of 2-amino-2-methyl-1-propanol, triethylamine, triethanolamine, diethanolamine, dimethylethanolamine, 2-dimethylamino-2-methyl-1-propanol, and mixtures thereof.

16. An aqueous coating composition according to claim 1, wherein said amine is present in an amount of 0.05% to 3% of the total weight of the coating composition.

17. An aqueous coating composition according to claim 1, further comprising an additive mixture including carbon black.

18. An aqueous coating composition according to claim 17, wherein said additive mixture comprises 20 to 25% by weight carbon black, 15% to 25% by weight glycol, 1% to 3% by weight of a nonionic surfactant, and at least 50% by weight water.

19. An aqueous coating composition according to claim 1, further comprising a thickener.

20. An aqueous coating composition according to claim 1, further comprising a conductive pigment.

21. A method of coating a substrate comprising applying to said substrate a composition according to claim 1.

22. A method of coating an article with an aqueous coating composition, comprising contacting said article with a composition including:
(a) a polyol having a molecular weight of at least 62 to 500 in an amount sufficient to coalesce the coating composition;
(b) 0.5% to 40% by weight of a resin selected from halogenated polyolefinic resin materials, halogenated polyvinyl resins, epihydrin resins, halogenated epoxy resins, and mixtures thereof, said resin having a molecular weight of 10,000 to 30,000.;
(c) 0.05 to 15% by weight of a surfactant;
(d) 0.01% to 10% by weight of an amine selected from primary, secondary and tertiary aliphatic amines having an amine functionality of 1 to 3, and mixtures thereof, and
(e) 30 to 95% by weight water, wherein said composition contains less than 5% by weight of aromatic organic solvents.

23. A method according to claim 22, wherein said resin is at least in part a halogenated polyolefinic resin material and said halogenated polyolefinic resin material is present in an amount of 2 to 10 weight percent.

24. A method according to claim 23, wherein said halogenated polyolefinic resin material has a molecular weight of 15,000 to 30,000.

25. A method according to claim 23, wherein said halogenated polyolefinic resin material is a chlorinated polyolefin with a chlorine content of 10 to 40% by weight.

26. A method according to claim 22, wherein said polyol is a glycol.

27. A method according to claim 22, wherein said surfactant is an alkoxylated nonionic surfactant.

28. A method according to claim 22, wherein said amine is selected from the group consisting of alkylamines, alkyldianines, alkanolamines, dialkanolamines, tertiary amines, poly(oxyalkylene)diamines, and mixtures thereof.

29. A method according to claim 22, wherein said amine further comprises at least one hydroxy, ethoxy, or propoxy group.

30. A method according to claim 22, wherein said amine is selected from the group consisting of 2-amino-2-methyl-1-propanol, triethylamine, triethanolamine, diethanolamine, dimethylethanolamine, 2-dimethylamino-2-methyl-1-propanol, and mixtures thereof.

31. A method of making an aqueous coating composition according to claim 1, comprising the steps of:
(a) preparing said composition as a concentrate having a reduced level of water compared with the aqueous coating composition according to claim 1 which is to be made, and
(b) diluting the concentrate of step (a) with additional water to produce the composition of claim 1.

## Claims (Claims for the following Contracting State(s): ES)

1. An aqueous coating composition, comprising:
(a) a polyol having a molecular weight of at least 62 to 500 in an amount sufficient to coalesce the coating composition;
(b) 0.5% to 40% by weight of a resin selected from halogenated polyolefinic resin materials, halogenated polyvinyl resins, epihydrin resins, halogenated epoxy resins, and mixtures thereof, said resin having a molecular weight of 10,000 to 30,000, or a softening point of 66 to 177°C (150 to 350°F) ;
(c) 0.05 to 15% by weight of a surfactant;
(d) 0.01% to 10% by weight of an amine selected from primary, secondary and tertiary aliphatic amines having an amine functionality of 1 to 3, and mixtures thereof, and
(e) 30 to 95% by weight water, wherein said composition contains less than 5% by weight of aromatic organic solvents.

2. An aqueous coating composition according to claim 1, wherein said resin is at least in part a halogenated polyolefinic resin material and said halogenated polyolefinic resin material is present in an amount of 2 to 10 weight percent.

3. An aqueous coating composition according to claim 2, wherein said halogenated polyolefinic resin material is present in an amount of 2 to 5 weight percent.

4. An aqueous coating composition according to claim 2, wherein said halogenated polyolefinic resin material has a molecular weight of 15,000 to 30,000.

5. An aqueous coating composition according to claim 4, wherein said halogenated polyolefinic resin material has a molecular weight of 22,000 to 29,000.

6. An aqueous coating composition according to claim 2, wherein said halogenated polyolefinic resin material is a chlorinated polyolefin with a chlorine content of 10 to 40% by weight.

7. An aqueous coating composition according to claim 1, wherein said polyol is a glycol.

8. An aqueous coating composition according to claim 1, wherein said polyol is an alkylene glycol.

9. An aqueous coating composition according to claim 1, wherein said polyol is present at a level of 3 to 10% by weight.

10. An aqueous coating composition according to claim 1, wherein said surfactant is an alkoxylated nonionic surfactant.

11. An aqueous coating composition according to claim 10, wherein said nonionic surfactant is present in an amount of 0.05% to 15% by weight.

12. An aqueous coating composition according to claim 10, wherein said nonionic surfactant has 7 to 10 ethylene oxide groups per mole of surfactant.

13. An aqueous coating composition according to claim 1, wherein said amine is selected from the group consisting of alkylamines, alkyldiamines, alkanolamines, dialkanolamines, tertiary amines, poly(oxyalkylene) diamines, and mixtures thereof.

14. An aqueous coating composition according to claim 1, wherein said amine further comprises at least one hydroxy, ethoxy, or propoxy group.

15. An aqueous coating composition according to claim 1, wherein said amine is selected from the group consisting of 2-amino-2-methyl-1-propanol, triethylamine, triethanolamine, diethanolamine, dimethylethanolamine, 2-dimethylamino-2-methyl-1-propanol, and mixtures thereof.

16. An aqueous coating composition according to claim 1, wherein said amine is present in an amount of 0.05% to 3% of the total weight of the coating composition.

17. An aqueous coating composition according to claim 1, further comprising an additive mixture including carbon black.

18. An aqueous coating composition according to claim 17, wherein said additive mixture comprises 20 to 25% by weight carbon black, 15% to 25% by weight glycol, 1% to 3% by weight of a nonionic surfactant, and at least 50% by weight water.

19. An aqueous coating composition according to claim 1, further comprising a thickener.

20. An aqueous coating composition according to claim 1, further comprising a conductive pigment.

21. A method of coating a substrate comprising applying to said substrate a composition according to claim 1.

22. A method of coating an article with an aqueous coating composition, comprising contacting said article with a composition including:
(a) a polyol having a molecular weight of at least 62 to 500 in an amount sufficient to coalesce the coating composition;
(b) 0.5% to 40% by weight of a resin selected from halogenated polyolefinic resin materials, halogenated polyvinyl resins, epihydrin resins, halogenated epoxy resins, and mixtures thereof, said resin having a molecular weight of 10,000 to 30,000, or a softening point of 66 to 177°C (150 to 350°F) ;
(c) 0.05 to 15% by weight of a surfactant;
(d) 0.01% to 10% by weight of an amine selected from primary, secondary and tertiary aliphatic amines having an amine functionality of 1 to 3, and mixtures thereof, and
(e) 30 to 95% by weight water, wherein said composition contains less than 5% by weight of aromatic organic solvents.

23. A method according to claim 22, wherein said resin is at least in part a halogenated polyolefinic resin material and said halogenated polyolefinic resin material is present in an amount of 2 to 10 weight percent.

24. A method according to claim 23, wherein said halogenated polyolefinic resin material has a molecular weight of 15,000 to 30,000.

25. A method according to claim 23, wherein said halogenated polyolefinic resin material is a chlorinated polyolefin with a chlorine content of 10 to 40% by weight.

26. A method according to claim 22, wherein said polyol is a glycol.

27. A method according to claim 22, wherein said surfactant is an alkoxylated nonionic surfactant.

28. A method according to claim 22, wherein said amine is selected from the group consisting of alkylamines, alkyldiamines, alkanolamines, dialkanolamines, tertiary amines, poly(oxyalkylene)diamines, and mixtures thereof.

29. A method according to claim 22, wherein said amine further comprises at least one hydroxy, ethoxy, or propoxy group.

30. A method according to claim 22, wherein said amine is selected from the group consisting of 2-amino-2-methyl-1-propanol, triethylamine, triethanolamine, diethanolamine, dimethylethanolamine, 2-dimethylamino-2-methyl-1-propanol, and mixtures thereof.

31. A method of making an aqueous coating composition according to claim 1, comprising the steps of:
(a) preparing said composition as a concentrate having a reduced level of water compared with the aqueous coating composition according to claim 1 which is to be made, and
(b) diluting the concentrate of step (a), if required, with additional water to produce the composition of claim 1.

## Patentansprüche (Patentansprüche für folgende(n) Vertragsstaat(en): FR, DE, IT, SE, CH, GB)

1. Eine wässrige Beschichtungszusammensetzung, umfassend:
(a) ein Polyol mit einem Molekulargewicht von mindestens 62 bis 500 in einer Menge, die ausreichend ist, um die Beschichtungszusammensetzung ineinanderfließen zu lassen;
(b) 0,5 bis 40 Gew.-% eines Harzes, das aus halogenierten polyolefinischen Harzmaterialien, halogenierten Polyvinylharzen, Epihydrinharzen, halogenierten Epoxyharzen und Gemischen davon ausgewählt ist und ein Molekulargewicht von 10000 bis 30000 aufweist;
(c) 0,05 bis 15 Gew.-% eines Tensids;
(d) 0,01 bis 10 Gew.-% eines Amins, das aus primären, sekundären und tertiären aliphatischen Aminen mit einer Aminfunktionalität von 1 bis 3 und Gemischen davon ausgewählt ist, und
(e) 30 bis 95 Gew.-% Wasser, wobei die Zusammensetzung weniger als 5 Gew.-% aromatischer organischer Lösungsmittel enthält.

2. Wässrige Beschichtungszusammensetzung nach Anspruch 1, wobei das Harz mindestens teilweise ein halogeniertes polyolefinisches Harzmaterial ist und das halogenierte polyolefinische Harzmaterial in einer Menge von 2 bis 10 Gew.-% vorliegt.

3. Wässrige Beschichtungszusammensetzung nach Anspruch 2, wobei das halogenierte polyolefinische Harzmaterial in einer Menge von 2 bis 5 Gew.-% vorliegt.

4. Wässrige Beschichtungszusammensetzung nach Anspruch 2, wobei das halogenierte polyolefinische Harzmaterial ein Molekulargewicht von 15000 bis 30000 aufweist.

5. Wässrige Beschichtungszusammensetzung nach Anspruch 2, wobei das halogenierte polyolefinische Harzmaterial ein Molekulargewicht von 22000 bis 29000 aufweist.

6. Wässrige Beschichtungszusammensetzung nach Anspruch 2, wobei das halogenierte polyolefinische Harzmaterial ein chloriertes Polyolefin mit einem Chlorgehalt von 10 bis 40 Gew.-% ist.

7. Wässrige Beschichtungszusammensetzung nach Anspruch 1, wobei das Polyol ein Glycol ist.

8. Wässrige Beschichtungszusammensetzung nach Anspruch 1, wobei das Polyol ein Alkylenglycol ist.

9. Wässrige Beschichtungszusammensetzung nach Anspruch 1, wobei das Polyol in einer Menge von 3 bis 10 Gew.-% vorliegt.

10. Wässrige Beschichtungszusammensetzung nach Anspruch 1, wobei das Tensid eine alkoxyliertes nichtionisches Tensid ist.

11. Wässrige Beschichtungszusammensetzung nach Anspruch 10, wobei das nichtionische Tensid in einer Menge von 0,05 bis 15 Gew.-% vorliegt.

12. Wässrige Beschichtungszusammensetzung nach Anspruch 10, wobei das nichtionische Tensid 7 bis 10 Ethylenoxidgruppen pro Mol des Tensids aufweist.

13. Wässrige Beschichtungszusammensetzung nach Anspruch 1, wobei das Amin aus der Gruppe bestehend aus Alkylaminen, Alkyldiaminen, Alkanolaminen, Dialkanolaminen, tertiären Aminen, Poly(oxyalkylen)diaminen und Gemischen davon ausgewählt ist.

14. Wässrige Beschichtungszusammensetzung nach Anspruch 1, wobei das Amin ferner mindestens eine Hydroxy-, Ethoxy- oder Propoxygruppe umfasst.

15. Wässrige Beschichtungszusammensetzung nach Anspruch 1, wobei das Amin aus der Gruppe bestehend aus 2-Amino-2-methyl-1-propanol, Triethylamin, Triethanolamin, Diethanolamin, Dimethylethanolamin, 2-Dimethylamino-2-methyl-1-propanol und Gemischen davon ausgewählt ist.

16. Wässrige Beschichtungszusammensetzung nach Anspruch 1, wobei das Amin in einer Menge von 0,05 bis 3 Gew.-% des Gesamtgewichts der Beschichtungszusammensetzung vorliegt.

17. Wässrige Beschichtungszusammensetzung nach Anspruch 1, die ferner ein Additivgemisch umfasst, welches Ruß umfasst.

18. Wässrige Beschichtungszusammensetzung nach Anspruch 17, wobei das Additivgemisch 20 bis 25 Gew.-% Ruß, 15 bis 25 Gew.-% Glycol, 1 bis 3 Gew.-% eines nichtionischen Tensids und mindestens 50 Gew.-% Wasser umfasst.

19. Wässrige Beschichtungszusammensetzung nach Anspruch 1, die ferner ein Verdickungsmittel umfasst.

20. Wässrige Beschichtungszusammensetzung nach Anspruch 1, die ferner ein leitfähiges Pigment umfasst.

21. Ein Verfahren zur Beschichtung eines Substrats, umfassend das Aufbringen einer Zusammensetzung nach Anspruch 1 auf das Substrat.

22. Ein Verfahren zur Beschichtung eines Gegenstands mit einer wässrigen Beschichtungszusammensetzung, umfassend das In-Kontakt-Bringen des Gegenstands mit einer Zusammensetzung, die umfasst:
(a) ein Polyol mit einem Molekulargewicht von mindestens 62 bis 500 in einer Menge, die ausreichend ist, um die Beschichtungszusammensetzung ineinanderfließen zu lassen;
(b) 0,5 bis 40 Gew.-% eines Harzes, das aus halogenierten polyolefinischen Harzmaterialien, halogenierten Polyvinylharzen, Epihydrinharzen, halogenierten Epoxyharzen und Gemischen davon ausgewählt ist und ein Molekulargewicht von 10000 bis 30000 aufweisl;
(c) 0,05 bis 15 Gew.-% eines Tensids;
(d) 0,01 bis 10 Gew.-% eines Amins, das aus primären, sekundären und tertiären aliphatischen Aminen mit einer Aminfunktionalität von 1 bis 3 und Gemischen davon ausgewählt ist, und
(e) 30 bis 95 Gew.-% Wasser, wobei die Zusammensetzung weniger als 5 Gew.-% aromatischer organischer Lösungsmittel enthält.

23. Verfahren nach Anspruch 22, wobei das Harz mindestens teilweise ein halogeniertes polyolefinisches Harzmaterial ist und das halogenierte polyolefinische Harzmaterial in einer Menge von 2 bis 10 Gew.-% vorliegt.

24. Verfahren nach Anspruch 23, wobei das halogenierte polyolefinische Harzmaterial ein Molekulargewicht von 15000 bis 30000 aufweist.

25. Verfahren nach Anspruch 23, wobei das halogenierte polyolefinische Harzmaterial ein chloriertes Polyolefin mit einem Chlorgehalt von 10 bis 40 Gew.-% ist.

26. Verfahren nach Anspruch 22, wobei das Polyol ein Glycol ist.

27. Verfahren nach Anspruch 22, wobei das Tensid eine alkoxyliertes nichtionisches Tensid ist.

28. Verfahren nach Anspruch 22, wobei das Amin aus der Gruppe bestehend aus Alkylaminen, Alkyldiaminen, Alkanolaminen, Dialkanolaminen, tertiären Aminen, Poly(oxyalkylen)diaminen und Gemischen davon ausgewählt ist.

29. Wässrige Beschichtungszusammensetzung nach Anspruch 22, wobei das Amin ferner mindestens eine Hydroxy-, Ethoxy- oder Propoxygruppe umfasst.

30. Wässrige Beschichtungszusammensetzung nach Anspruch 22, wobei das Amin aus der Gruppe bestehend aus 2-Amino-2-methyl-1-propanol, Triethylamin, Triethanolamin, Diethanolamin, Dimethylethanolamin, 2-Dimethylamino-2-methyl-1-propanol und Gemischen davon ausgewählt ist.

31. Ein Verfahren zur Herstellung einer wässrigen Beschichtungszusammensetzung gemäß Anspruch 1, umfassend die Schritte:
(a) Herstellen der Zusammensetzung als Konzentrat mit einem geringeren Wassergehalt bezogen auf die wässrige Beschichtungszusammensetzung gemäß Anspruch 1, die hergestellt werden soll, und
(b) Verdünnen des Konzentrats von Schritt (a) mit zusätzlichem Wasser, um die Zusammensetzung gemäß Anspruch 1 herzustellen.

## Patentansprüche (Patentansprüche für folgende(n) Vertragsstaat(en): ES)

1. Eine wässrige Beschichtungszusammensetzung, umfassend:
(a) ein Polyol mit einem Molekulargewicht von mindestens 62 bis 500 in einer Menge, die ausreichend ist, um die Beschichtungszusammensetzung ineinanderfließen zu lassen;
(b) 0,5 bis 40 Gew.-% eines Harzes, das aus halogenierten polyolefinischen Harzmaterialien, halogenierten Polyvinylharzen, Epihydrinharzen, halogenierten Epoxyharzen und Gemischen davon ausgewählt ist und ein Molekulargewicht von 10000 bis 30000 oder einen Erweichungspunkt von 66 bis 177°C (150 bis 350°F) aufweist;
(c) 0,05 bis 15 Gew.-% eines Tensids;
(d) 0,01 bis 10 Gew.-% eines Amins, das aus primären, sekundären und tertiären aliphatischen Aminen mit einer Aminfunktionalität von 1 bis 3 und Gemischen davon äusgewählt ist, und
(e) 30 bis 95 Gew.-% Wasser, wobei die Zusammensetzung weniger als 5 Gew.-% aromatischer organischer Lösungsmittel enthält.

2. Wässrige Beschichtungszusammensetzung nach Anspruch 1, wobei das Harz mindestens teilweise ein halogeniertes polyolefinisches Harzmaterial ist und das halogenierte polyolefinische Harzmaterial in einer Menge von 2 bis 10 Gew.-% vorliegt.

3. Wässrige Beschichtungszusammensetzung nach Anspruch 2, wobei das halogenierte polyolefinische Harzmaterial in einer Menge von 2 bis 5 Gew.-% vorliegt.

4. Wässrige Beschichtungszusammensetzung nach Anspruch 2, wobei das halogenierte polyolefinische Harzmaterial ein Molekulargewicht von 15000 bis 30000 aufweist.

5. Wässrige Beschichtungszusammensetzung nach Anspruch 2, wobei das halogenierte polyolefinische Harzmaterial ein Molekulargewicht von 22000 bis 29000 aufweist.

6. Wässrige Beschichtungszusammensetzung nach Anspruch 2, wobei das halogenierte polyolefinische Harzmaterial ein chloriertes Polyolefin mit einem Chlorgehalt von 10 bis 40 Gew.-% ist.

7. Wässrige Beschichtungszusammensetzung nach Anspruch 1, wobei das Polyol ein Glycol ist.

8. Wässrige Beschichtungszusammensetzung nach Anspruch 1, wobei das Polyol ein Alkylenglycol ist.

9. Wässrige Beschichtungszusammensetzung nach Anspruch 1, wobei das Polyol in einer Menge von 3 bis 10 Gew.-% vorliegt.

10. Wässrige Beschichtungszusammensetzung nach Anspruch 1, wobei das Tensid eine alkoxyliertes nichtionisches Tensid ist.

11. Wässrige Beschichtungszusammensetzung nach Anspruch 10, wobei das nichtionische Tensid in einer Menge von 0,05 bis 15 Gew.-% vorliegt.

12. Wässrige Beschichtungszusammensetzung nach Anspruch 10, wobei das nichtionische Tensid 7 bis 10 Ethylenoxidgruppen pro Mol des Tensids aufweist.

13. Wässrige Beschichtungszusammensetzung nach Anspruch 1, wobei das Amin aus der Gruppe bestehend aus Alkylaminen, Alkyldiaminen, Alkanolaminen, Dialkanolaminen, tertiären Aminen, Poly(oxyalkylen)diaminen und Gemischen davon ausgewählt ist.

14. Wässrige Beschichtungszusammensetzung nach Anspruch 1, wobei das Amin ferner mindestens eine Hydroxy-, Ethoxy- oder Propoxygruppe umfasst.

15. Wässrige Beschichtungszusammensetzung nach Anspruch 1, wobei das Amin aus der Gruppe bestehend aus 2-Amino-2-methyl-1-propanol, Triethylamin, Triethanolamin, Diethanolamin, Dimethylethanolamin, 2-Dimethylamino-2-methyl-1-propanol und Gemischen davon ausgewählt ist.

16. Wässrige Beschichtungszusammensetzung nach Anspruch 1, wobei das Amin in einer Menge von 0,05 bis 3 Gew.-% des Gesamtgewichts der Beschichtungszusammensetzung vorliegt.

17. Wässrige Beschichtungszusammensetzung nach Anspruch 1, die ferner ein Additivgemisch umfasst, welches Ruß umfasst.

18. Wässrige Beschichtungszusammensetzung nach Anspruch 17, wobei das Additivgemisch 20 bis 25 Gew.-% Ruß, 15 bis 25 Gew.-% Glycol, 1 bis 3 Gew.-% eines nichtionischen Tensids und mindestens 50 Gew.-% Wasser umfasst.

19. Wässrige Beschichtungszusammensetzung nach Anspruch 1, die ferner ein Verdickungsmittel umfasst.

20. Wässrige Beschichtungszusammensetzung nach Anspruch 1, die ferner ein leitfähiges Pigrnent umfasst.

21. Ein Verfahren zur Beschichtung eines Substrats, umfassend das Aufbringen einer Zusammensetzung nach Anspruch 1 auf das Substrat.

22. Ein Verfahren zur Beschichtung eines Gegenstands mit einer wässrigen Beschichtungszusammensetzung, umfassend das In-Kontakt-Bringen des Gegenstands mit einer Zusammensetzung, die umfasst:
(a) ein Polyol mit einem Molekulargewicht von mindestens 62 bis 500 in einer Menge, die ausreichend ist, um die Beschichtungszusammensetzung ineinanderfließen zu lassen;
(b) 0,5 bis 40 Gew.-% eines Harzes, das aus halogenierten polyolefinischen Harzmaterialien, halogenierten Polyvinylharzen, Epihydrinharzen, halogenierten Epoxyharzen und Gemischen davon ausgewählt ist und ein Molekulargewicht von 10000 bis 30000 oder einen Erweichungspunkt von 66 bis 177°C (150 bis 350°F) aufweist;
(c) 0,05 bis 15 Gew.-% eines Tensids;
(d) 0,01 bis 10 Gew.-% eines Amins, das aus primären, sekundären und tertiären aliphatischen Aminen mit einer Aminfunktionalität von 1 bis 3 und Gemischen davon ausgewählt ist, und
(e) 30 bis 95 Gew.-% Wasser, wobei die Zusammensetzung weniger als 5 Gew.-% aromatischer organischer Lösungsmittel enthält.

23. Verfahren nach Anspruch 22, wobei das Harz mindestens teilweise ein halogeniertes polyolefinisches Harzmaterial ist und das halogenierte polyolefinische Harzmaterial in einer Menge von 2 bis 10 Gew.-% vorliegt.

24. Verfahren nach Anspruch 23, wobei das halogenierte polyolefinische Harzmaterial ein Molekulargewicht von 15000 bis 30000 aufweist.

25. Verfahren nach Anspruch 23, wobei das halogenierte polyolefinische Harzmaterial ein chloriertes Polyolefin mit einem Chlorgehalt von 10 bis 40 Gew.-% ist.

26. Verfahren nach Anspruch 22, wobei das Polyol ein Glycol ist.

27. Verfahren nach Anspruch 22, wobei das Tensid eine alkoxyliertes nichtionisches Tensid ist.

28. Verfahren nach Anspruch 22, wobei das Amin aus der Gruppe bestehend aus Alkylaminen, Alkyldiaminen, Alkanolaminen, Dialkanolaminen, tertiären Aminen, Poly(oxyalkylen)diaminen und Gemischen davon ausgewählt ist.

29. Wässrige Beschichtungszusammensetzung nach Anspruch 22, wobei das Amin ferner mindestens eine Hydroxy-, Ethoxy- oder Propoxygruppe umfasst.

30. Wässrige Beschichtungszusammensetzung nach Anspruch 22, wobei das Amin aus der Gruppe bestehend aus 2-Amino-2-methyl-1-propanol, Triethylamin, Triethanolamin, Diethanolamin, Dimethylethanolamin, 2-Dimethylamino-2-methyl-1-propanol und Gemischen davon ausgewählt ist.

31. Ein Verfahren zur Herstellung einer wässrigen Beschichtungszusammensetzung gemäß Anspruch 1, umfassend die Schritte:
(a) Herstellen der Zusammensetzung als Konzentrat mit einem geringeren Wassergehalt bezogen auf die wässrige Beschichtungszusammensetzung gemäß Anspruch 1, die hergestellt werden soll, und
(b) gegebenenfalls Verdünnen des Konzentrats von Schritt (a) mit zusätzlichem Wasser, um die Zusammensetzung gemäß Anspruch 1 herzustellen.

## Revendications (Revendications pour l'(les) Etat(s) contractant(s) suivant(s): FR, DE, IT, SE, CH, GB)

1. Composition aqueuse de revêtement, comprenant :
(a) un polyol ayant une masse moléculaire d'au moins 62 à 500 en une quantité suffisante pour faire coalescer la composition de revêtement ;
(b) 0,5 % à 40 % en poids d'une résine choisie parmi les matériaux de résines polyoléfiniques halogénées, les résines polyvinyliques halogénées, les résines épihydrine, les résines époxy halogénées, et leurs mélanges, ladite résine ayant une masse moléculaire de 10000 à 30000 ;
(c) 0,05 à 15 % en poids d'un agent tensioactif ;
(d) 0,01 % à 10 % en poids d'une amine choisie parmi les amines aliphatiques primaires, secondaires et tertiaires ayant une fonctionnalité amine de 1 à 3, et leurs mélanges, et
(e) 30 à 95 % en poids d'eau, ladite composition contenant moins de 5 % en poids de solvants organiques aromatiques.

2. Composition aqueuse de revêtement selon la revendication 1, dans laquelle ladite résine est au moins en partie un matériau de résine polyoléfinique halogénée et ledit matériau de résine polyoléfinique halogénée est présent en une quantité de 2 à 10 pour cent en poids.

3. Composition aqueuse de revêtement selon la revendication 2, dans laquelle ledit matériau de résine polyoléfinique halogénée est présent en une quantité de 2 à 5 pour cent en poids.

4. Composition aqueuse de revêtement selon la revendication 2, dans laquelle ledit matériau de résine polyoléfinique halogénée a une masse moléculaire de 15000 à 30000.

5. Composition aqueuse de revêtement selon la revendication 4, dans laquelle ledit matériau de résine polyoléfinique halogénée a une masse moléculaire de 22000 à 29000.

6. Composition aqueuse de revêtement selon la revendication 2, dans laquelle ledit matériau de résine polyoléfinique halogénée est une polyoléfine chlorée ayant une teneur en chlore de 10 à 40 % en poids.

7. Composition aqueuse de revêtement selon la revendication 1, dans laquelle ledit polyol est un glycol.

8. Composition aqueuse de revêtement selon la revendication 1, dans laquelle ledit polyol est un alkylèneglycol.

9. Composition aqueuse de revêtement selon la revendication 1, dans laquelle ledit polyol est présent à un niveau de 3 à 10 % en poids.

10. Composition aqueuse de revêtement selon la revendication 1, dans laquelle ledit agent tensioactif est un agent tensioactif non ionique alcoxylé.

11. Composition aqueuse de revêtement selon la revendication 10, dans laquelle ledit agent tensioactif non ionique est présent en une quantité de 0,05 % à 15 % en poids.

12. Composition aqueuse de revêtement selon la revendication 10, dans laquelle ledit agent tensioactif non ionique a 7 à 10 groupes oxyde d'éthylène par mole d'agent tensioactif.

13. Composition aqueuse de revêtement selon la revendication 1, dans laquelle ladite amine est choisie parmi le groupe constitué par les alkylamines, alkyldiamines, alcanolamines, dialcanolamines, amines tertiaires, poly(oxyalkylène)diamines, et leurs mélanges.

14. Composition aqueuse de revêtement selon la revendication 1, dans laquelle ladite amine comprend en outre au moins un groupe hydroxy, éthoxy, ou propoxy.

15. Composition aqueuse de revêtement selon la revendication 1, dans laquelle ladite amine est choisie parmi le groupe constitué par le 2-amino-2-méthyl-1-propanol, la triéthylamine, la triéthanolamine, la diéthanol-amine, la diméthyléthanolamine, le 2-diméthylamino-2-méthyl-1-propanol, et leurs mélanges.

16. Composition aqueuse de revêtement selon la revendication 1, dans laquelle ladite amine est présente en une quantité de 0,05 % à 3 % du poids total de la composition de revêtement.

17. Composition aqueuse de revêtement selon la revendication 1, comprenant en outre un mélange d'additifs comprenant du noir de carbone.

18. Composition aqueuse de revêtement selon la revendication 17, dans laquelle ledit mélange d'additifs comprend 20 à 25 % en poids de noir de carbone, 15 % à 25 % en poids de glycol, 1 % à 3 % en poids d'un agent tensioactif non ionique, et au moins 50 % en poids d'eau.

19. Composition aqueuse de revêtement selon la revendication 1, comprenant en outre un agent épaississant.

20. Composition aqueuse de revêtement selon la revendication 1, comprenant en outre un pigment conducteur.

21. Procédé de revêtement d'un substrat comprenant l'application audit substrat d'une composition selon la revendication 1.

22. Procédé de revêtement d'un article avec une composition aqueuse de revêtement, comprenant la mise en contact dudit article avec une composition comprenant :
(a) un polyol ayant une masse moléculaire d'au moins 62 à 500 en une quantité suffisante pour faire coalescer la composition de revêtement ;
(b) 0,5 % à 40 % en poids d'une résine choisie parmi les matériaux de résines polyoléfiniques halogénées, les résines polyvinyliques halogénées, les résines épihydrine, les résines époxy halogénées, et leurs mélanges, ladite résine ayant une masse moléculaire de 10000 à 30000 ;
(c) 0,05 à 15 % en poids d'un agent tensioactif ;
(d) 0,01 % à 10 % en poids d'une amine choisie parmi les amines aliphatiques primaires, secondaires et tertiaires ayant une fonctionnalité amine de 1 à 3, et leurs mélanges, et
(e) 30 à 95 % en poids d'eau, ladite composition contenant moins de 5 % en poids de solvants organiques aromatiques.

23. Procédé selon la revendication 22, dans lequel ladite résine est au moins en partie un matériau de résine polyoléfinique halogénée et ledit matériau de résine polyoléfinique halogénée est présent en une quantité de 2 à 10 pour cent en poids.

24. Procédé selon la revendication 23, dans lequel ledit matériau de résine polyoléfinique halogénée a une masse moléculaire de 15000 à 30000.

25. Procédé selon la revendication 23, dans lequel ledit matériau de résine polyoléfinique halogénée est une polyoléfine chlorée ayant une teneur en chlore de 10 à 40 % en poids.

26. Procédé selon la revendication 22, dans lequel ledit polyol est un glycol.

27. Procédé selon la revendication 22, dans lequel ledit agent tensioactif est agent tensioactif non ionique alcoxylé.

28. Procédé selon la revendication 22, dans lequel ladite amine est choisie dans le groupe constitué par les alkylamines, alkyldiamines, alcanolamines, dialcanolamines, amines tertiaires, poly(oxyalkylène)diamines, et leurs mélanges.

29. Procédé selon la revendication 22, dans lequel ladite amine comprend en outre au moins un groupe hydroxy, éthoxy, ou propoxy.

30. Procédé selon la revendication 22, dans lequel ladite amine est choisie est choisie parmi le groupe constitué par le 2-amino-2-méthyl-1-propanol, la triéthyl-amine, la triéthanolamine, la diéthanolamine, la diméthyléthanolamine, le 2-diméthylamino-2-méthyl-1-propanol, et leurs mélanges.

31. Procédé de fabrication d'une composition aqueuse de revêtement selon la revendication 1, comprenant les étapes consistant à :
(a) préparer ladite composition sous la forme d'un concentré ayant un niveau réduit d'eau comparé avec la composition aqueuse de revêtement selon la revendication 1, qui est à fabriquer, et
(b) diluer le concentré de l'étape (a) avec de l'eau additionnelle pour produire la composition de la revendication 1.

## Revendications (Revendications pour l'(les) Etat(s) contractant(s) suivant(s): ES)

1. Composition aqueuse de revêtement, comprenant :
(a) un polyol ayant une masse moléculaire d'au moins 62 à 500 en une quantité suffisante pour faire coalescer la composition de revêtement ;
(b) 0,5 % à 40 % en poids d'une résine choisie parmi les matériaux de résines polyoléfiniques halogénées, les résines polyvinyliques halogénées, les résines épihydrine, les résines époxy halogénées, et leurs mélanges, ladite résine ayant une masse moléculaire de 10000 à 30000, ou un point de ramollissement de 66 à 177°C (150 à 350°F).
(c) 0,05 à 15 % en poids d'un agent tensioactif ;
(d) 0,01 % à 10 % en poids d'une amine choisie parmi les amines aliphatiques primaires, secondaires et tertiaires ayant une fonctionnalité amine de 1 à 3, et leurs mélanges, et
(e) 30 à 95 % en poids d'eau, ladite composition contenant moins de 5 % en poids de solvants organiques aromatiques.

2. Composition aqueuse de revêtement selon la revendication 1, dans laquelle ladite résine est au moins en partie un matériau de résine polyoléfinique halogénée et ledit matériau de résine polyoléfinique halogénée est présent en une quantité de 2 à 10 pour cent en poids.

3. Composition aqueuse de revêtement selon la revendication 2, dans laquelle ledit matériau de résine polyoléfinique halogénée est présent en une quantité de 2 à 5 pour cent en poids.

4. Composition aqueuse de revêtement selon la revendication 2, dans laquelle ledit matériau de résine polyoléfinique halogénée a une masse moléculaire de 15000 à 30000.

5. Composition aqueuse de revêtement selon la revendication 4, dans laquelle ledit matériau de résine polyoléfinique halogénée a une masse moléculaire de 22000 à 29000.

6. Composition aqueuse de revêtement selon la revendication 2, dans laquelle ledit matériau de résine polyoléfinique halogénée est une polyoléfine chlorée ayant: une teneur en chlore de 10 à 40 % en poids.

7. Composition aqueuse de revêtement selon la revendication 1, dans laquelle ledit polyol est un glycol.

8. Composition aqueuse de revêtement selon la revendication 1, dans laquelle ledit polyol est un alkylèneglycol.

9. Composition aqueuse de revêtement selon la revendication 1, dans laquelle ledit polyol est présent à un niveau de 3 à 10 % en poids.

10. Composition aqueuse de revêtement selon la revendication 1, dans laquelle ledit agent tensioactif est un agent tensioactif non ionique alcoxylé.

11. Composition aqueuse de revêtement selon la revendication 10, dans laquelle ledit agent tensioactif non ionique est présent en une quantité de 0,05 % à 15 % en poids.

12. Composition aqueuse de revêtement selon la revendication 10, dans laquelle ledit agent tensioactif non ionique a 7 à 10 groupes oxyde d'éthylène par mole d'agent tensioactif.

13. Composition aqueuse de revêtement selon la revendication 1, dans laquelle ladite amine est choisie parmi le groupe constitué par les alkylamines, alkyldiamines, alcanolamines, dialcanolamines, amines tertiaires, poly(oxyalkylène)diamines, et leurs mélanges.

14. Composition aqueuse de revêtement selon la revendication 1, dans laquelle ladite amine comprend en outre au moins un groupe hydroxy, éthoxy, ou propoxy.

15. Composition aqueuse de revêtement selon la revendication 1, dans laquelle ladite amine est choisie parmi le groupe constitué par le 2-amino-2-méthyl-1-propanol, la triéthylamine, la triéthanolamine, la diéthanol-amine, la diméthyléthanolamine, le 2-diméthylamino-2-méthyl-1-propanol, et leurs mélanges.

16. Composition aqueuse de revêtement selon la revendication 1, dans laquelle ladite amine est présente en une quantité de 0,05 % à 3 % du poids total de la composition de revêtement.

17. Composition aqueuse de revêtement selon la revendication 1, comprenant en outre un mélange d'additifs comprenant du noir de carbone.

18. Composition aqueuse de revêtement selon la revendication 17, dans laquelle ledit mélange d'additifs comprend 20 à 25 % en poids de noir de carbone, 15 % à 25 % en poids de glycol, 1 % à 3 % en poids d'un agent tensioactif non ionique, et au moins 50 % en poids d'eau.

19. Composition aqueuse de revêtement selon la revendication 1, comprenant en outre un agent épaississant.

20. Composition aqueuse de revêtement selon la revendication 1, comprenant en outre un pigment conducteur.

21. Procédé de revêtement d'un substrat comprenant l'application audit substrat d'une composition selon la revendication 1.

22. Procédé de revêtement d'un article avec une composition aqueuse de revêtement, comprenant la mise en contact dudit article avec une composition comprenant :
(a) un polyol ayant une masse moléculaire d'au moins 62 à 500 en une quantité suffisante pour faire coalescer la composition de revêtement ;
(b) 0,5 % à 40 % en poids d'une résine choisie parmi les matériaux de résines polyoléfiniques halogénées, les résines polyvinyliques halogénées, les résines d'épihydrine, les résines époxy halogénées, et leurs mélanges, ladite résine ayant une masse moléculaire de 10000 à 30000, ou un point de ramollissement de 66 à 177°C (150 à 350°F) ;
(c) 0,05 à 15 % en poids d'un agent tensioactif ;
(d) 0,01 % à 10 % en poids d'une amine choisie parmi les amines aliphatiques primaires, secondaires et tertiaires ayant une fonctionnalité amine de 1 à 3, et leurs mélanges, et
(e) 30 à 95 % en poids d'eau, ladite composition contenant moins de 5 % en poids de solvants organiques aromatiques.

23. Procédé selon la revendication 22, dans lequel ladite résine est au moins en partie un matériau de résine polyoléfinique halogénée et ledit matériau de résine polyoléfinique halogénée est présent en une quantité de 2 à 10 pour cent en poids.

24. Procédé selon la revendication 23, dans lequel ledit matériau de résine polyoléfinique halogénée a une masse moléculaire de 15000 à 30000.

25. Procédé selon la revendication 23, dans lequel ledit matériau de résine polyoléfinique halogénée est une polyoléfine chlorée ayant une teneur en chlore de 10 à 40 % en poids.

26. Procédé selon la revendication 22, dans lequel ledit polyol est un glycol.

27. Procédé selon la revendication 22, dans lequel ledit agent tensioactif est un agent tensioactif non ionique alcoxylé.

28. Procédé selon la revendication 22, dans lequel ladite amine est choisie parmi le groupe constitué par les alkylamines, alkyldiamines, alcanolamines, dialcanolamines, amines tertiaires, poly(oxyalkylène)diamines, et leurs mélanges.

29. Procédé selon la revendication 22, dans lequel ladite amine comprend en outre au moins un groupe hydroxy, éthoxy, ou propoxy.

30. Procédé selon la revendication 22, dans lequel ladite amine est choisie est choisie parmi le groupe constitué par le 2-amino-2-méthyl-1-propanol, la triéthyl-amine, la triéthanolamine, la diéthanolamine, la diméthyléthanolamine, le 2-diméthylamino-2-méthyl-1-propanol, et leurs mélanges.

31. Procédé de fabrication d'une composition aqueuse de revêtement selon la revendication 1, comprenant les étapes consistant à :
(a) préparer ladite composition sous la forme d'un concentré ayant un niveau réduit d'eau comparé avec la composition aqueuse de revêtement selon la revendication 1, qui est à fabriquer, et
(b) diluer le concentré de l'étape (a) avec de l'eau additionnelle pour produire la composition de la revendication 1.
